# NEUE EUROPÄISCHE PATENTSCHRIFT

(11) **EP 1 621 903 B2**
(45) Veröffentlichungstag und Bekanntmachung des Hinweises auf die Entscheidung über den Einspruch: **28.07.2010**
(45) Hinweis auf die Patenterteilung: 09.08.2006
(21) Anmeldenummer: 04015743.0
(22) Anmeldetag: 05.07.2004
(51) Int. Cl.: G02B 5/28, B60Q 1/04

(54) **Nachtsichtgerät für Fahrzeuge**
Night vision device for vehicles
Appareil de vision nocturne pour véhicules

(43) Veröffentlichungstag der Anmeldung: 01.02.2006
(73) Patentinhaber: OC Oerlikon Balzers AG, 9496 Balzers (LI)
(72) Erfinder: Nguyen, Van Du, 9473 Gams (CH)

(56) Entgegenhaltungen:
- EP-A- 0 936 107
- EP-A- 1 298 481
- EP-A1- 1 099 962
- DD-A1- 203 983
- DE-T2- 68 924 853
- FR-A- 2 800 152
- US-A- 4 931 315
- US-A- 5 552 927
- US-A1- 2001 019 482
- SCHRÖDER, G.: 'Technische Optik', 1990, VOGEL BUCHVERLAG, WÜRZBURG Seiten 108-110 - 167-168
- 'FEE Fahrzeugtechnik EWG/ECE', Bd. 6, August 2003, KIRSCHBAUM VERLAG, BONN Artikel 'ECE R1-R20, ECE-R7, Anh.5, 47. Ergänzungslieferung', Seite 24C
- FA. SPINDLER & HOYER: 'Präzisionsoptik', 1988 Seite T3, T19
- Internetdarstellung zur Software "OptiLayer"
- ECE-Regelung Nr. 7
- ECE-Regelung Nr. 48

## Beschreibung

Die vorliegende Erfindung betrifft Nachtsicht-Hilfssysteme für Fahrzeuge. Es sind solche Systeme bekannt, die einen Infrarot-Scheinwerfer umfassen, der eine nach außen vor das Fahrzeug gerichtete Strahlung aussendet, sowie eine Infrarot-Kamera und ein System zur Übermittlung eines von der Kamera aufgenommenen Bildes in sichtbarer Form an den Fahrer. Der Schweinwerfer weist eine Weißlichtquelle und einen Filter auf, der den sichtbaren Teil der Strahlung der Strahlungsquelle unterdrückt und den im Infrarot-Bereich gelegenen Teil überträgt.

Ein derartiges Filter läßt jedoch in der Praxis oft einen Teil der sichtbaren, insbesondere im roten Farbbereich gelegenen Strahlung passieren. Bei einem Scheinwerfer sind aber derartige rote Durchlaßstrahlungen, egal wie intensiv sie sind, störend, da sie für andere Fahrer zu einer Verwechslung zwischen Vorder- und Rückseite des Fahrzeugs führen können. Die Verbesserung der Filter hinsichtlich der Unterdrückung des roten Lichtes unter Beibehaltung des nützlichen Teils der Infrarot-Strahlung, d.h. des Strahlungsbereichs zwischen 800nm und 1000nm ist allerdings teuer. Dabei ist problematisch, dass der zu unterdrückende (rote) Bereich sich unmittelbar an den nützlichen, durchzulassenden Infrarotbereich anschliesst. Hierzu wäre notwendig, dass die Transmissionscharakteristik des Filters steile Kanten aufweist, da eine notwendige sehr gute Unterdrückung im roten Bereich einer notwendigen sehr guten Übertragung im IR Bereich gegenübersteht.

Um dieses Problem zu lösen offenbart EP 0 936 107 eine Infrarot-Beleuchtungsvorrichtung, die ein Filter umfasst, dessen Transmissionsgrad derart ausgelegt ist, daß sie entlang einer Achse der Vorrichtung weiße und infrarote Strahlung aussendet, wobei die Intensität der weißen Strahlung zwar durchaus von Null verschieden sein kann, jedoch weniger als 2000 Cd beträgt.

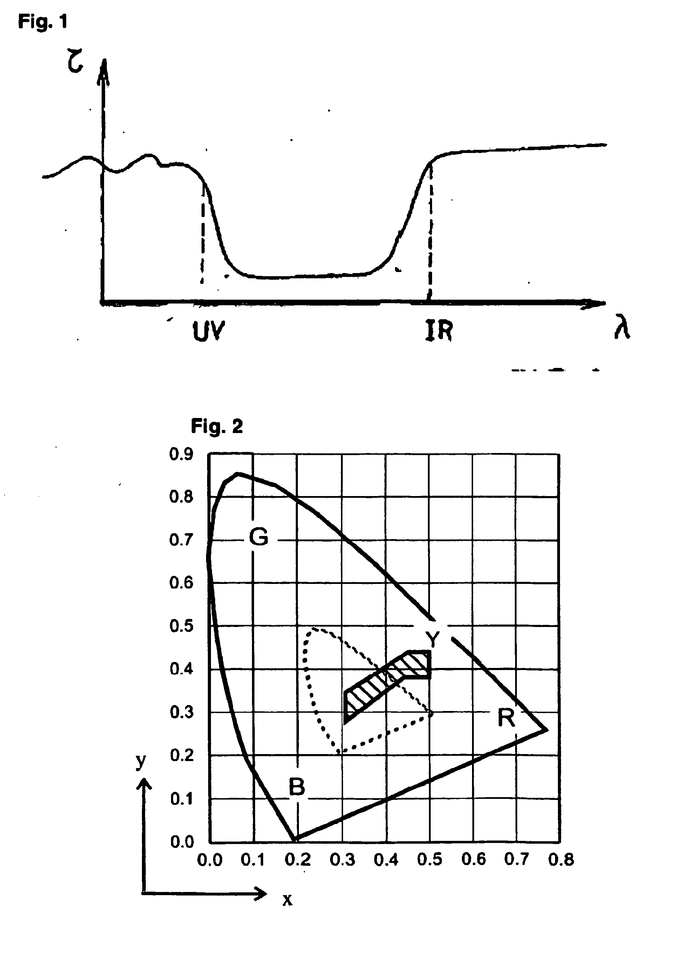

Dies wird dadurch erzielt, dass das Filter Infrarot-Strahlen (IR-Strahlen), Ultraviolett-Strahlen (UV-Strahlen) sowie sichtbare, blau- und rotnahe Strahlen und sichtbare Grundstrahlen mit gelbgrüner Grundfarbe zwischen diesen überträgt. Figur 1 zeigt schematisch den Transmissionsgrad T eines Kerbfilters wie es dazu eingesetzt werden kann als Funktion der Wellenlänge λ gemäß einer Ausführungsform in EP 0 936 107. Die dabei transmittierte sichtbare Reststrahlung addiert sich dann zu einem weissen Farbeindruck.

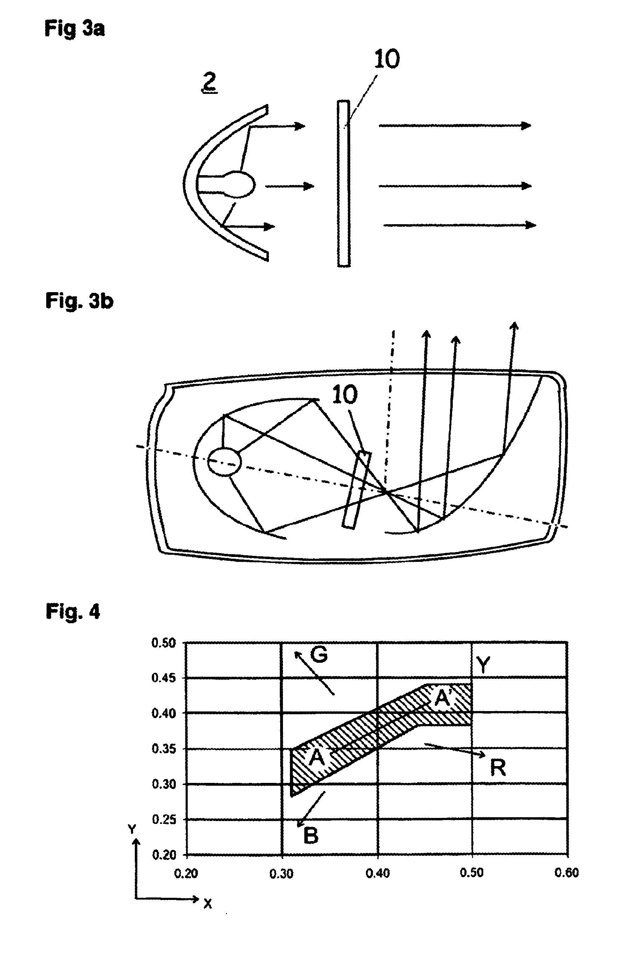

Solche Kerbfilter lassen sich mittels eines Multischichtsystems realisieren. Deren Reflexions- und Transmissionscharakteristika beruhen dabei im wesentlichen auf Interferenzeffekten. Gemäß dem Stand der Technik sollte der Filter dann so realisiert werden, dass er die sichtbare Strahlung einer Strahlungsquelle derart zu übertragen vermag, dass die Synthese des übertragenen sichtbaren Teils weißes Licht ergibt (siehe Anspruch 3 von EP 0 936 107). Da Interferenzfilter ein winkelabhängiges Transmissionsverhalten zeigen, muss der Filter allerdings der jeweiligen Beleuchtungsgeometrie des Scheinwerfers angepasst werden. Beispielsweise zeigt Figur 3a einen Scheinwerfer 2 mit einer Beleuchtungsgeometrie in der der Filter 10 im Wesentlichen senkrecht beaufschlagt wird. Demgegenüber führt die Beleuchtungsgeometrie des Scheinwerfers in Figur 3b zu einer Beaufschlagungsgeometrie in der die senkrechte Beaufschlagung im wesentlichen keine Rolle spielt. Ein solche Anpassung des Filters an eine jeweilige neue Geometrie ist aber aufwändig und damit teuer.

Es wird eine Infrarot-Beleuchtungsvorrichtung mit Filter angegeben, bei dem keine Synthese der gesamten transmittierten Strahlung notwendig ist um die gewünschte Farbmetrik zu erreichen. Die Transmissionscharakteristik des Filters sollte eine große Toleranz gegenüber Variationen in der Beleuchtungsgeometrie aufweisen.

Ein weiteres Problem sind die mit der Herstellung solcher Interferenzfilter verbundenen, nur schwer zu vermeidenden Designschwankungen. Zu den wesentlichen Parametern, die die Transmissionscharakteristika mitbestimmen, gehören die optischen Schichtdicken sowie die Brechwerte der Schichten. Geringe Schwankungen dieser Parameter während des Beschichtungsprozesses oder, was viel wahrscheinlicher ist, von einer Beschichtung zur nächsten, können dabei Einfluss darauf haben, welche Teile des sichtbaren Lichtes wie übertragen werden. Dabei ist erschwerend zu beachten, dass lediglich ein kleiner Teil der sichtbaren Strahlung durchgelassen werden soll (Beispielsweise im Bereich von 0.5%) und daher schon kleine Unsicherheiten in der Transmission zu großen Änderungen im Farbeindruck führen können.

Ein Verfahren wird angegeben, demgemäß die für die Beleuchtungsvorrichtungen benötigten Interferenzfilter mit hoher Ausbeute hergestellt werden können, ohne dass es kostenintensiver Massnahmen zur Verkleinerung der Herstellungsschwankungen bedarf. Die erfindung wird in Anspruch 1 definiert.

### Erfindungsgemässe Lösung:

Wie der Fachmann weiss wird der Farbeindruck durch im Wesentlichen 3 Einflußfaktoren bestimmt: a) die Abstrahlcharakteristik der Lichtquelle (typische Lichtquellen haben ihr Maximum im grünen oder gelbgrünen Spektralbereich), b) einen physiologischen Faktor, der mit der wellenlängenabhängigen Lichtempfindlichkeit des menschlichen Sehapparates zusammenhängt, wobei die Lichtempfindlichkeit im Gelben am höchsten ist und c) die Transmissionscharakteristik des verwendeten optischen Systems. Technisch läßt sich der Farbeindruck mittels den sogenannten Farbkoordinaten spezifizieren. Fig. 2 zeigt schematisch, wie einem entsprechenden Diagramm blauer (B), grüner (G), roter (R) und gelber (Y) Farbeindruck zuzuordnen sind. Ausserdem ist in Fig. 2 der Bereich mit einer durchbrochenen Linie umrahmt, in dem ein weißer Farbeindruck vorherrscht. Der in Fig. 2 eingezeichnete schraffierte Bereich gibt den für ein System derzeit vorgeschriebenen gesetzlich zulässigen Bereich gemäß der sogenannten ECE-Norm an, die hier erfüllt werden soll. Dieser zugelassene Bereich ist nochmals in Fig. 4 vergrößert dargestellt.

Die von einer Beleuchtungsvorrichtung ausgehende Strahlung muss, um gesetzlich zugelassen zu werden, innerhalb dieses ECE-Bereiches liegen. Die Aufgabe liegt nun darin dies für unterschiedliche Beaufschlagungsgeometrien gleichzeitig zu realisieren. In der Regel strahlen die typischen Strahlungsquellen in jeder Richtung, in die sie tatsächlich abstrahlen, mit im wesentlichen derselben spektralen Charakteristik. Um die gewünschte Toleranz gegenüber der Beaufschlagungsgeometrie zu erzielen hat ein erfindungsgemäßer Filter die Eigenschaft, für einen breiten Bereich von Einfallswinkeln jeweils einen Teil der sichtbaren Strahlung zu übertragen und zwar so, dass für jeden der Einfallswinkel des Bereichs für sich weisses Licht übertragen wird.

Dies kann dadurch verwirklicht werden dass die übertragene Strahlung unmittelbar nach Austritt aus dem Filter für jeden Winkel des Bereichs zu denselben Farbkoordinaten führt. Eine derart restriktive Bedingung ist jedoch gar nicht notwendig. Wie der Erfinder feststellte, genügt es schon sicherzustellen, dass für den Einfallswinkelbereich jeweils Farbkoordinaten realisiert werden, die innerhalb des gesetzlich zugelassenen Bereichs liegt. Wie der Erfinder ausserdem feststellte, ist es dabei besonders vorteilhaft eine Variation entlang der Blau-Gelben Achse zuzulassen (Figur 4 entlang der Achse A-A`). Bei der Herstellung des Interferenzfilters wird dementsprechend sowohl während der Designphase als auch während der Herstellungsphase besonders darauf geachtet, dass die Transmissionscharakteristik des Filters im grünen Bereich besonders stabil ist. Dies sowohl in Bezug auf Herstellungstoleranzen als auch in Bezug auf Winkelabhängigkeit. Demgegenüber werden an die Stabilität in den blauen und gelb-roten Bereichen geringere Anforderungen angesetzt. Dies hat zu Folge dass es zwar Variationen der Farbkoordinaten in Bezug auf Einfallswinkel und/oder Herstellungstoleranzen gibt. Diese Variationen spielen sich aber im wesentlichen entlang der Achse A-A' in der Figur 4 ab. Damit gelingt es die gesetzlichen Anforderungen einfacher und besser einzuhalten als dies bisher gemäß dem Stand der Technik möglich war.

Anhand eines Beispiels wird nun detailliert die Herstellung eines erfindungsgemäßen Filters beschrieben, der für einen Winkelbereich von 0° bis 40° zu Farbkoordinaten führt die alle innerhalb der ECE-Weissbereichs liegen.

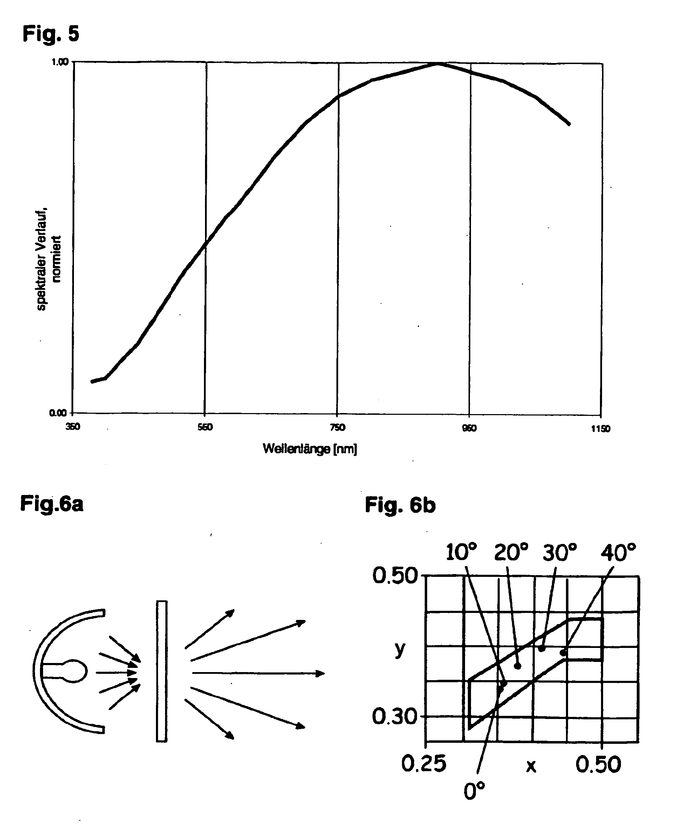

Der Filter soll in einem Nachtsicht-Hilfssystem zum Einsatz kommen, das mit einer Halogen Scheinwerferlampe der Firma Osram vom Typ H11 (12V, 55W, 64211SUP) ausgestattet ist. Der entsprechende spektrale Verlauf ist in Figur 5 dargestellt. Der schematische Aufbau eines solchen Scheinwerfers ist in Figur 6a dargestellt.

Als Substratmaterial für den Filter wird ein Corning Glassubstrat verwendet

Im Beispiel werden die Beschichtungsmaterialien Nioboxid als hochbrechendes und Si02 als niederbrechendes Material für den Filter verwendet. Alternative Beschichtungsmaterialen wären beispielsweise Titanoxid/Siliziumoxid oder Tantaloxid/Siliziumoxid möglich.

Zur Ermittlung der benötigten Schichtdicken des Vielschichtsystems wurde ein kommerzielles Dünnschichtrechnungsprogramm verwendet (OptiLayer for Windows von den Herren A. Tikhonravov und M. Trubetskov).

Mittels eines sogenannten RayTrace Programms (ASAP, kommerzielle Software), d.h. mit einer Software die es erlaubt optische Wege von Strahlen in komplexen optischen Systemen zu simulieren, wird ermittelt, welche Einfallswinkel relevant sind. Für das hier zu beschreibende Beispiel ergibt die Berechnung mit ASAP dass der Schwerpunkt-Einfallswinkel auf den Filter bei 20° liegt. Um jedoch weitgehend unabhängig von dem genauen System-Layout zu sein wird das Design zusätzlich für 0 bis 40° optimiert, so dass die Variation entlang der "ECE-Weissbereich Achse" verlaufen (Figur 4 entlang der Achse A-A').

Hierzu wird das Design jeweils schrittweise für einen Winkel optimiert. Als erstes wird ein Design ermittelt, das für 20° Einfallswinkel im sichtbaren Bereich im Mittel weniger als 0.5% transmittiert. Das Design sollte ausserdem eine steile Kante aufweissen, dessen T=50%-Punkt im Beispiel bei 780nm liegt und das für den Infrarot-Bereich (Wellenlängen 800-1000nm) mehr als 75% transmittiert. Zusätzlich, um in der Anwendung das menschliche Auge zu schützen, wird das Design so ausgelegt, dass ab ca. 1040nm auf einer Breite von minderstens 25nm im nahen infraroten Bereich weniger als 60% transmittiert werden.

Danach wird für den Einfallswinkel von 20° unter Beibehaltung der spektralen Charakteristik der Farbort optimiert derart, dass er möglichst zentral im Bereich der ECE-Norm zu liegen kommt (also möglichst nahe an und vorzugsweise genau die Koordinaten: x=0.375 und y=0.375). Anschliessend werden die Farbkoordinaten für die Einfallswinkel 0°, 30° und 40° optimiert, so dass sie innerhalb des Bereiches der ECE-Norm zu liegen kommen. Für diese Einfallswinkel müssen jedoch nicht dieselben Farbkoordinaten wie für den Einfallswinkel von 20° realisiert werden. Es wird lediglich gefordert dass der Winkelshift möglichst innerhalb des ECE-Weissbereichs entlang einer Achse verläuft die in Figur 4 mit den Referenzen A-A' angedeutet ist. Dies wird dann besonders einfach erreicht, wenn darauf geachtet wird, dass die Spektren der unterschiedlichen Winkel für den grünen Bereich (480-580nm) eine möglichst kleine Änderung aufweisen. Das Resultat einer solchen Optimierung ist in Figur 6b für 0°, 10°, 20°, 30° und 40° Einfallswinkel dargestellt. Die A-A' Achse kann mittels der Geradengleichung y=0.695*x+0.1 definiert werden. In Figur 6b fällt auf, dass mit zunehmendem Einfallswinkel die x-Koordinate monoton steigt. Die y Koordinate sollte bei einer x-Koordinate, die im Intervall 0.31≤ x ≤0.45 liegt, um maximal 0.025 von der definierten Geraden abweichen. Für kleineres x liegt der Farbort nicht mehr im ECE-Bereich, für größeres x ist ein eher horizontaler Verlauf wünschenswert, da hier der ECE-Bereich den entsprechenden Verlauf hat.

Die Einschränkung der Änderung im grünen Bereich wird dadurch erzielt, dass dieser Bereich bei der Optimierung stark gewichtet wird. Dies ist nicht nur notwendig, um zu garantieren dass das Filterdesign für Einfallswinkel von 0° bis 40° entlang der ECE-Weissbereich verlaufen, sondern auch um die Lichtstärkeänderung klein zu halten, da hierbei der grüne Bereich den größten Einfluß hat.

Die Brechungsindex des verwendete Materials Nioboxid ist 2.34 und Siliziumoxid ist 1.47.

Für die Herstellung des Filters wurde im Beispiel Sputtertechnologie angewendet (genauer: reaktives DC-Magnetron sputtering). In Situ werden während des Prozesses fortlaufend die optischen Spektren ermittelt (Monitoring) und der Sputterprozess bei gemessenen Abweichungen vom berechneten Sollspektrum korrigiert. Hierdurch wird erreicht, dass die realisierten Filter tatsächlich, insbesondere im grünen Bereich, die geforderten optischen Charakteristika aufweisen. Mit anderen Worten: Damit der Farbort in den ECE Weiss verläuft, wird das Monitoring beim Herstellung des Produktes besonders im Wellenlängenbereich von 480-580nm am höchsten gewichtet.

Es sind alternativ auch andere Beschichtungstechniken verwendbar. Hierzu gehören unter anderem die PVD und CVD Prozesse. Als PVD Prozesse können beispielsweise thermisches Verdampfen insbesondere dann zur Anwendung kommen wenn dieser Prozess plasmaunterstützt ist (IAD).

Wird ein solches Filter in den Strahlengang eines Scheinwerfers eingebaut so läßt sich eine Infrarot-Beleuchtungsvorrichtung für Kraftfahrzeuge, zum Beispiel ein Scheinwerfer, realisieren mit wenigstens einer Strahlungsquelle und einem Filter, wobei die Vorrichtung in einer Achse der Vorrichtung eine weisse und infrarote Strahlung in einem Wellenlängenbereich auszusenden vermag, der zwischen 800 und 1200nm liegt, wobei die Infrarot-Strahlung eine Intensität von mehr als 25 W/sr hat und die weisse Strahlung eine Intensität ungleich Null von weniger als 2000 Cd hat. Der Filter vermag unter einem ersten Winkel einen ersten sichtbaren Teil eines ersten Teilstrahls der Strahlungsquelle zu übertragen und unter einem zweiten, vom ersten verschiedenen Winkel, einen zweiten sichtbaren Teil eines zweiten Teilstrahls der Strahlungsquelle. Kennzeichnend ist, dass der übertragene erste sichtbare Teil weißes Licht bildet und der übertragene zweite sichtbare Teil weißes Licht bildet.

## Patentansprüche

1. Infrarot-Beleuchtungsvorrichtung für Kraftfahrzeuge, zum Beispiel ein Scheinwerfer, mit wenigstens einer Strahlungsquelle (2) und einem Interferenzfilter (10), wobei die Vorrichtung in einer Achse eine weisse und infrarote Strahlung in einem Wellenlängenbereich zwischen 800 und 1200nm auszusenden vermag, wobei die Infrarot-Strahlung eine Intensität von mehr als 25 W/sr hat und die weisse Strahlung eine Intensität ungleich Null von weniger als 2000 Cd hat
**dadurch gekennzeichnet, dass**
der Interferenzfilter (10) derart gestaltet ist,
dass für jeden beliebigen Einfallswinkel von 0° bis 40° gilt,
dass der durch den Interferenzfilter (10) übertragene Teil der Strahlung der Strahlungsquelle (2) unmittelbar nach dem Interferenzfilter (10) weißes Licht gemäß ECE-Norm ist, wobei
für zwei unter verschiedenen Einfalls-Winkeln übertragene Teile des weißen Lichts gilt, dass der größere der beiden Einfalls Winkel auf eine x-Koordinate des Farbortes des entsprechenden übertragenen weißen Teils führt, die größer ist als die x-Koordinate des Farbortes des übertragenen weißen Teils auf die der kleinere Einfalls Winkel führt und
die jeweilige y-Koordinate des Farbortes des den Einfallswinkeln entsprechenden übertragenen weiβen Teils um nicht mehr als 0.025 von der durch die Gleichung y=0.695*x+0.1 definierten Geraden abweicht, und die x-Koordinaten im Intervall 0.31≤ x ≤0.45 liegen.

## Claims

1. Infrared lightning device for motor vehicles, for example a headlamp, with at least one beam source (2) and an interference filter (10), where the device can emit in one axis a white and infrared beam in a wavelength range between 800 and 1200 nm, where the infrared beam has an intensity of more than 25 W/sr and the white beam an intensity not equal to zero of less than 2000 Cd, **characterized in that** the interference filter (10) is structured such that for any arbitrary angle of incidence from 0° to 40°, the part of the beam from the beam source (2) transmitted through the interference filter (10), immediately after the interference filter (10) is white light to EEC standard, where for two parts of the white light transmitted at different angles of incidence, the larger of the two angles of incidence leads to an x co-ordinate of the colour location of the corresponding white part transmitted which is greater than the x co-ordinate of the colour location of the transmitted white part to which the smaller angle of incidence leads, and the respective y co-ordinate of the colour location of the white part transmitted corresponding to the angle of incidence deviates by no more than 0.025 from the straight gradient defined by the equation y=0.695*x+0.1, and the x co-ordinates lie in the range 0.31≤x≤0.45.

## Revendications

1. Dispositif d'éclairage infrarouge pour véhicule automobile, par exemple phare, ledit dispositif comportant au moins une source de rayonnement (2) et un filtre interférentiel (10), le dispositif étant apte à émettre suivant un axe un rayonnement blanc et infrarouge dans une gamme de longueurs d'onde allant de 800 nm à 1200 nm, le rayonnement infrarouge ayant une intensité de plus de 25 W/sr et le rayonnement blanc ayant une intensité non nulle inférieure à 2000 Cd,
**caractérisé en ce que** le filtre interférentiel (10) est conformé de sorte que, pour tout angle d'incidence allant de 0° à 40°, la partie du rayonnement de la source de rayonnement (2), qui est transmise par le filtre interférentiel (10), est, juste après le filtre interférentiel (10), une lumière selon la norme ECE, mais pour deux parties de lumière blanche transmises avec des angles d'incidence différents, le plus grand des deux angles d'incidence donne une coordonnée x de la localisation chromatique de la partie blanche correspondante transmise qui est supérieure à la coordonnée de la localisation chromatique de la partie blanche transmise que donne le plus petit des angles d'incidence et la coordonnée y respective de la localisation chromatique de la partie blanche transmise correspondant aux angles d'incidence ne s'écarte pas de plus de 0,025 de la droite définie par l'équation y = 0,695*x+0,1, et les coordonnées x sont situées dans l'intervalle 0,31 ≤ x ≤ 0,45.
